# EUROPÄISCHE PATENTSCHRIFT

(11) **EP 2 092 701 B1**
(45) Veröffentlichungstag und Bekanntmachung des Hinweises auf die Patenterteilung: **13.07.2011**
(21) Anmeldenummer: 07821734.6
(22) Anmeldetag: 23.10.2007
(51) Int. Cl.: H04L 12/56

(54) **ANORDNUNG UND VERFAHREN ZUR REGULIERUNG EINER DATENÜBERTRAGUNG IN EINEM NETZ**
ARRANGEMENT AND METHOD FOR REGULATING DATA TRANSMISSION IN A NETWORK
DISPOSITIF ET PROCÉDÉ POUR LA RÉGULATION D'UN TRANSFERT DE DONNÉES DANS UN RÉSEAU

(30) Priorität: 08.11.2006 DE 102006052709
(43) Veröffentlichungstag der Anmeldung: 26.08.2009
(73) Patentinhaber: Nokia Siemens Networks GmbH & Co. KG, 81541 München (DE)
(72) Erfinder: SCHÜLER, Hartmut, 82064 Strasslach (DE); WIEGAND, Frank, 80805 München (DE)
(86) Internationale Anmeldenummer: PCT/EP2007/061371
(87) Internationale Veröffentlichungsnummer: WO 2008/055779

(56) Entgegenhaltungen:
- WO-A-03/009541
- WO-A-2005/119968

## Beschreibung

Die Erfindung bezieht sich auf eine in dem Oberbegriff des Patentanspruchs 1 angegebene Anordnung und ein in dem Oberbegriff des Anspruchs 4 angegebenes Verfahren zur Datenübertragung in einem Netz.

Um in einem Netz zur Datenübertragung Überlastattacken von Teilnehmern des Netzes, beispielsweise eines Internet Protokoll Netzes, abzuwehren, muss die Datenübertragung dieser Teilnehmer begrenzt oder blockiert werden. Bekannte Lösungen schützen nur die Datenverbindung zwischen einer zentralen Vermittlungseinheit, beispielsweise einem Soft-Switch, und damit verbundenen Anschlüssnetzservern, nicht aber teilnehmernahe Datenübertragungsstrecken.

Derartige Anordnungen sowie zugehörige Verfahren haben den Nachteil, dass die Datenübertragung von Teilnehmern eines Netzes durch Überlastattacken anderer Teilnehmer des Netzes behindert oder verhindert wird.

Aus WO 03/009541 A1 ist ein Verfahren zur Abwehr von Überlastattacken im Zugangsnetz bekannt, bei dem bei Überlast die Datenrate aller Teilnehmer reduziert wird.

Es ist Aufgabe der vorliegenden Erfindung eine Anordnung und ein Verfahren anzugeben, diesen Nachteil zu vermeiden und einen teilnehmernahen Schutz vor Überlastattacken anzugeben.

Gemäß der Erfindung wird die gestellte Aufgabe bei der Anordnung und dem Verfahren der eingangs erwähnten Art durch die im Patentanspruch 1 oder 4 aufgeführten Merkmale gelöst.

Durch die erfindungsgemäßen Maßnahmen ergibt sich der Vorteil, dass Überlastattacken auch im Zugangsnetz unterbunden werden können.

Der Gegenstand der Erfindung bringt den weiteren Vorteil mit sich, dass das Netz vor Service blockierenden Attacken besser geschützt werden kann.

Der Gegenstand der Erfindung bringt den weiteren Vorteil mit sich, dass insbesondere in Internet Protokollnetzen Überlastattacken auf den Voice over Internet Protokoll Signalisierungsverkehr wirksam unterbunden oder begrenzt werden können.

Weitere vorteilhafte Ausbildungen sind in den Unteransprüchen angegeben.

Weitere Besonderheiten der Erfindung werden aus den nachfolgenden Erläuterungen von Ausführungsbeispielen anhand von Zeichnungen ersichtlich.

Es zeigen:
- Fig. 1:: ein Blockschaltbild eines Netzes,
- Fig. 2:: ein Blockschaltbild eines Ausführungsbeispiels und
- Fig. 3:: ein Blockschaltbild eines weiteren Ausführungsbeispiels.

Die Erfindung beschreibt eine Anordnung und das dazugehörige Verfahren zur Datenübertragung in einem Netz NZ mit Teilnehmern T1, T2, ...Tn und mit mindesten einer Teilnehmer T1, T2, ...Tn vermittelnden Steuereinheit VSE. Ein erstes Mittel M1 in der Steuereinheit VSE ist derart ausgebildet, dass Datenüberlast erzeugende Teilnehmer T1, T2, ...Tn erkennbar sind, und dass die Datenübertragung dieser Teilnehmer T1, T2, ...Tn zwischen Teilnehmer T1, T2, ...Tn und Steuereinheit VSE regulierbar ist.

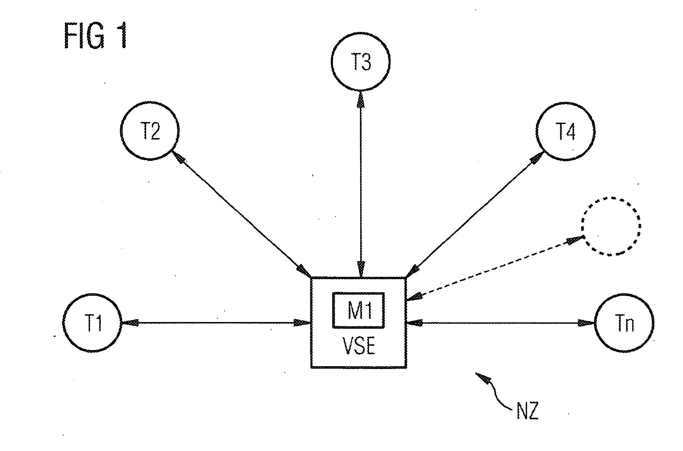

Die Anordnung in Fig 1 zeigt schematisch Komponenten eines Netzes NZ, beispielsweise eines Internet Protokollnetzes. Mehrere Teilnehmer T1, T2, ...Tn sind mit einer Teilnehmer T1, T2, ...Tn vermittelnden Steuereinheit VSE, beispielsweise mit einem Session Border Controller, verbunden. Zwischen der Steuereinheit VSE und den Teilnehmer T1, T2, ...Tn können noch andere Netzkomponenten, wie beispielsweise Remote Access Server, Edge Router oder Digital Subscriber Line Access Multiplexer, angeordnet sein. In der Steuereinheit VSE ist ein erstes Mittel M1 angeordnet, das erkennen kann, wenn bestimmte Teilnehmer T1, T2, ...Tn eine Datenüberlast im Netz verursachen. Das erste Mittel M1 kann bei Bedarf den Datenverkehr zwischen diesen Teilnehmern T1, T2, ...Tn und der Steuereinheit VSE regulieren, das heißt begrenzen oder unterbrechen. Insbesondere für Überlastattacken in Voice over Internet Protokoll Signalisierungsnetzen basierend auf dem Session Initiation Protokoll ist diese Regulierung des Datenverkehrs wirksam.

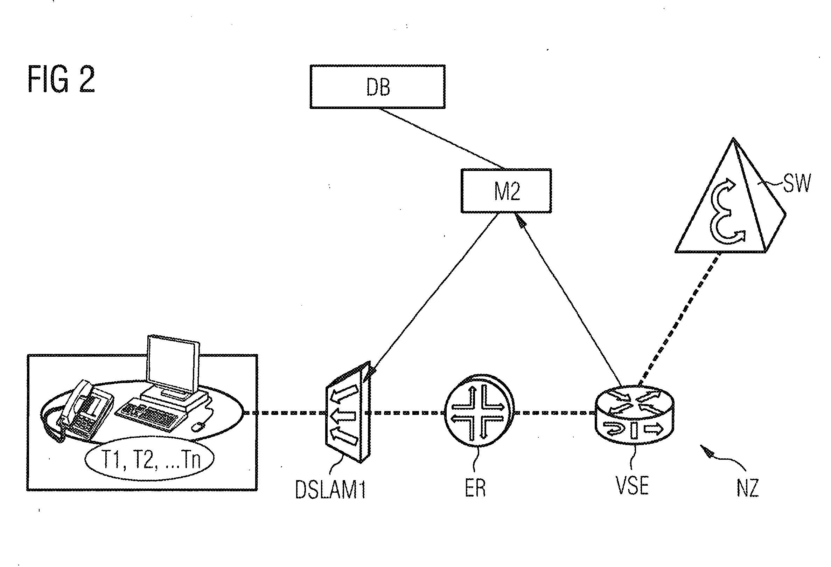

Fig. 2 zeigt ein Ausführungsbeispiels eines Netzes NZ, beispielsweise eines Voice over Internet Protokoll Signalisierungsnetzen basierend auf dem Session Initiation Protokoll, mit einem zentralen Vermittlungsserver SW, einer damit verbundenen Steuereinheit VSE, zum Beispiel ein Session Border Conroller, und einem damit verbunden Edge Router ER. Im Netz NZ können natürlich auch mehrere Steuereinheiten VSE an einem Vermittlungsserver SW und mehrere Edge Router ER an der Steuereinheit VSE angeschlossen sein. Mit dem Edge Router ist teilnehmerseitig ein Teilnehmermultiplexer DSLAM1, beispielsweise ein Digital Subsciber Line Accesss Multiplexer, verbunden. Im Netz NZ können natürlich auch mehrere Teilnehmermultiplexer DSLAM1, DSLAM2, ...DSLAMn mit dem der Steuereinheit VSE verbunden sein. Mehrere Teilnehmer T1, T2, ...Tn sind über Anschlussleitungen mit dem Teilnehmermultiplexer DSLAM1 verbunden. Ein zweites. Mittel M2, beispielsweise ein Dynamic Host Configuration Protokoll Server, ist ebenfalls über Netzleitungen mit der Steuereinheit VSE verbunden. Das zweite Mittel M2 kann auf eine Datenbank DB zugreifen.

Im Falle einer von der Steuereinheit VSE erkannten Datenüberlastattacke informiert die Steuereinheit VSE das zweite Mittel M2 über die erkannten Adressen, beispielsweise Internet Protokoll Adressen, der überlastenden bzw. attackierenden Teilnehmer T1, T2, ...Tn und über einen Zeitabschnitt t, innerhalb dessen Dauer die Datenübertragung der überlastenden Teilnehmer T1, T2, ...Tn reguliert werden soll. Das zweite Mittel M2 ermittelt mit Hilfe der Datenbank DB den betroffenen Teilnehmermultiplexer DSLAM1 und schickt die relevanten Informationen, wie Zeitabschnitt t und Adressen der überlastenden Teilnehmer T1, T2, ...Tn, an den Teilnehmermultiplexer DSLAM1. In dem Teilnehmermultiplexer DSLAM1 wird die Datenübertragung bzw. der Datenverkehr der überlastenden bzw. attackierenden Teilnehmer T1, T2, ...Tn für den Zeitabschnitt t reguliert, das heißt geblockt oder begrenzt.

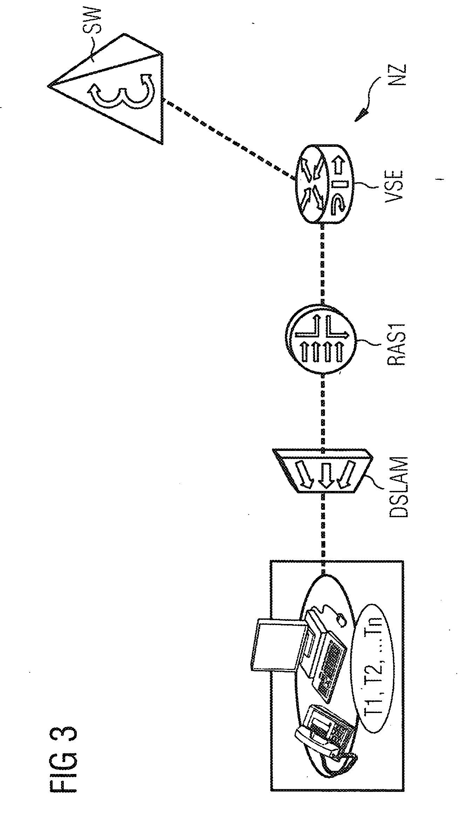

Fig. 3 zeigt ein weiteres Ausführungsbeispiel eines Netzes NZ, beispielsweise eines Voice over Internet Protokoll Signalisierungsnetzes basierend auf dem Session Initiation Protokoll, mit einem zentralen Vermittlungsserver SW, einer damit verbundenen Steuereinheit VSE, zum Beispiel ein Session Border Controller, und einem damit verbundenen Anschlussnetzserver RAS1, beispielsweise ein Remote Access Server. Es können natürlich auch mehrere Anschlussnetzserver RAS1, RAS2, ...RASn mit einer Steuereinheit VSE verbunden sein. Ein Teilnehmermultiplexer DSLAM ist mit dem Anschlussnetzserver RAS1 verbunden. Selbstverständlich können auch mehrere Teilnehmermultiplexer DSLAM1, DSLAM2, ...DSLAMn mit einem Anschlussnetzserver RAS1 verbunden sein. Mehrere Teilnehmer T1, T2, ...Tn sind mit dem Teilnehmermultiplexer DSLAM verbunden.

Im Falle einer von der Steuereinheit VSE erkannten Datenüberlastattacke informiert die Steuereinheit VSE den von der Datenüberlastattacke betroffenen Anschlussnetzserver RAS1 über die überlastenden Teilnehmer T1, T2, ...Tn mit zugehörigen Netzadressen und einem Zeitabschnitt t, der die Dauer einer Regulierung des Datenverkehrs der überlastenden Teilnehmer T1, T2, ...Tn angibt. Der Anschlussnetzserver RAS1 unterbricht oder begrenzt daraufhin die Datenübertragung der überlastenden Teilnehmer T1, T2, ...Tn für den Zeitabschnitt t. Die Datenübertragung kann beispielsweise ein Voice over Internet Protokoll Verkehr in einem Point to Point Protokoll over E-thernet Kanal sein.

## Patentansprüche

1. Anordnung zur Datenübertragung in einem Netz (NZ) mit Teilnehmern (T1, T2, ...Tn) und mit mindestens einer Teilnehmer (T1, T2, ...Tn) vermittelnden Steuereinheit (VSE), wobei mindestens ein Teilnehmermultiplexer (DSLAM1, DSLAM2, ...DSLAMn) im Netz (NZ) vorgesehen ist und jeder Teilnehmer (T1, T2, ...Tn) mit einem der Teilnehmermultiplexer (DSLAM1, DSLAM2, ...DSLAMn) verbunden ist,
wobei in der Steuereinheit (VSE) ein erstes Mittel (M1) vorgesehen und derart ausgebildet ist, dass Datenüberlast erzeugende Teilnehmer (T1, T2, ...Tn) erkennbar sind, wobei ein zweites Mittel (M2) im Netz (NZ) vorgesehen und derart ausgestaltet ist, dass aus einer Netzadresse eines Teilnehmers (T1, T2, ...Tn) der mit diesem verbundene Teilnehmermultiplexer (DSLAM1, DSLAM2, ...DSLAMn) ermittelbar ist, und wobei die Datenübertragung der Teilnehmer (T1, T2, ...Tn) zwischen Teilnehmer (T1, T2, ...Tn) und Steuereinheit (VSE) regulierbar ist,
**dadurch gekennzeichnet,**
**dass** die Steuereinheit (VSE) die Netzadressen der Überlast erzeugenden Teilnehmer (T1, T2, ...Tn) an das zweite Mittel (M2) überträgt, und
**dass** das zweite Mittel (M2) die ermittelten Teilnehmermultiplexer (DSLAM1, DSLAM2, ...DSLAMn) anweist, die Datenübertragung der Überlast erzeugenden Teilnehmer (T1, T2, ...Tn) für einen bestimmbaren Zeitabschnitt (t) zu regulieren.

2. Anordnung nach Anspruch 1,
**dadurch gekennzeichnet,**
**dass** mindestens ein Anschlussnetzserver (RAS1, RAS2, ...RASn) im Netz (NZ) vorgesehen ist,
**dass** jeder Teilnehmer (T1, T2, ...Tn) über einen Anschlussnetzserver (RAS1, RAS2, ...RASn) mit der Steuereinheit (VSE) verbunden ist,
**dass** die Steuereinheit (VSE) Netzadressen der ermittelten Überlast erzeugenden Teilnehmer (T1, T2, ...Tn) an den Anschlussnetzserver (RAS1, RAS2, ...RASn) weiterleitet, und
**dass** der Anschlussnetzserver (RAS1, RAS2, ...RASn) die Datenübertragung der Überlast erzeugenden Teilnehmer (T1, T2, ...Tn) für einen bestimmbaren Zeitabschnitt (t) reguliert.

3. Anordnung nach einem der vorhergehenden Ansprüche,
**dadurch gekennzeichnet,**
**dass** die Steuereinheit (VSE) derart ausgebildet ist, dass eine von den Teilnehmern (T1, T2, ...Tn) durch Signalisierung erzeugte Datenüberlast erkennbar ist.

4. Verfahren zur Datenübertragung in einem Netz (NZ) mit Teilnehmern (T1, T2, ...Tn) und mit mindestens einer Teilnehmer (T1, T2, ...Tn) vermittelnden Steuereinheit (VSE),
wobei Datenüberlast erzeugende Teilnehmer (T1, T2, ...Tn) erkannt werden und die Datenübertragung dieser Teilnehmer (T1, T2, ...Tn) zwischen Teilnehmer (T1, T2, ...Tn) und Steuereinheit (VSE) begrenzt wird, und wobei
aus einer Netzadresse eines Teilnehmers (T1, T2, ...Tn) ein mit diesem verbundener Teilnehmermultiplexer (DSLAM1, DSLAM2, ...DSLAMn) ermittelt wird,
**dadurch gekennzeichnet,**
**dass** die Netzadressen der Überlast erzeugenden Teilnehmer (T1, T2, ...Tn) an ein zweites Mittel (M2) übertragen werden und die ermittelten Teilnehmermultiplexer (DSLAM1, DSLAM2, ...DSLAMn) vom zweiten Mittel (M2) angewiesen werden, die Datenübertragung der Überlast erzeugenden Teilnehmer (T1, T2, ...Tn) für einen bestimmbaren Zeitabschnitt (t) zu regulieren.

5. Verfahren nach Anspruch 4,
**dadurch gekennzeichnet,**
**dass** Netzadressen der ermittelten Überlast erzeugenden Teilnehmer (T1, T2, ...Tn) an einen Anschlussnetzserver (RAS1, RAS2, ...RASn) weitergeleitet werden, und
**dass** vom Anschlussnetzserver (RAS1, RAS2, ...RASn) die Datenübertragung der Überlast erzeugenden Teilnehmer (T1, T2, ...Tn) für einen bestimmbaren Zeitabschnitt (t) reguliert werden.

6. Verfahren, nach einem der Ansprüche 4 oder 5,
**dadurch gekennzeichnet,**
**dass** eine von den Teilnehmern (T1, T2, ..Tn) durch Signalisierung erzeugte Datenüberlast erkennbar ist.

## Claims

1. Arrangement for data transmission in a network (NZ) comprising subscribers (T1, T2, ...Tn) and comprising at least one control unit (VSE) switching subscribers (T1, T2, ...Tn), wherein at least one subscriber multiplexer (DSLAM1, DSLAM2, ...DSLAMn) is provided in the network (NZ) and each subscriber (T1, T2, ...Tn) is connected to one of the subscriber multiplexers (DSLAM1, DSLAM2, ...DSLAMn),
wherein a first means (M1) is provided in the control unit (VSE) and arranged in such a manner that subscribers (T1, T2, ...Tn) generating data overloading can be detected, wherein a second means (M2) is provided in the network (NZ) and constructed in such a manner that from a network address of a subscriber (T1, T2, ...Tn), the subscriber multiplexer (DSLAM1, DSLAM2, ...DSLAMn) connected to it can be determined and wherein the data transmission of subscribers (T1, T2, ...Tn) between subscribers (T1, T2, ...Tn) and control unit (VSE) can be regulated, **characterized in that** the control unit (VSE) transmits the network addresses of the subscribers (T1, T2, ...Tn) generating overloading to the second means (M2), and
that the second means (M2) instructs the subscriber multiplexers (DSLAM1, DSLAM2, ...DSLAMn) determined to regulate the data transmission of the subscribers (T1, T2, ...Tn) generating overloading for a determinable time interval (t).

2. Arrangement according to Claim 1, **characterized in that** at least one access network server (RAS1, RAS2, ...RASn) is provided in the network (NZ),
that each subscriber (T1, T2, ...Tn) is connected to the control unit (VSE) via an access network server (RAS1, RAS2, ...RASn),
that the control unit (VSE) forwards network addresses of the determined subscribers (T1, T2, ...Tn) generating overloading to the access network server (RAS1, RAS2, ...RASn) and
that the access network server (RAS1, RAS2, ...RASn) regulates the data transmission of the subscribers (T1, T2, ...Tn) generating overloading for a determinable time interval (t).

3. Arrangement according to one of the preceding claims, **characterized in that** the control unit (VSE) is constructed in such a manner that data overloading generated through signalling by the subscribers (T1, T2, ...Tn) can be detected.

4. Method for data transmission in a network (NZ) comprising subscribers (T1, T2, ...Tn) and comprising at least one control unit (VSE) switching subscribers (T1, T2, ...Tn), wherein subscribers (T1, T2, ...Tn) generating data overloading are detected and the data transmission of these subscribers (T1, T2, ...Tn) between subscribers (T1, T2, ...Tn) and control unit (VSE) is limited, and wherein from a network address of a subscriber (T1, T2, ...Tn), a subscriber multiplexer (DSLAM1, DSLAM2, ...DSLAMn) connected to it is determined,
**characterized in that** the network addresses of the subscribers (T1, T2, ...Tn) generating overloading are transmitted to a second means (M2) and the subscriber multiplexers (DSLAM1, DSLAM2, ...DSLAMn) determined are instructed by the second means (M2) to regulate the data transmission of the subscribers (T1, T2, ...Tn) generating overloading for a determinable time interval (t).

5. Method according to Claim 4, **characterized in that** network addresses of the determined subscribers (T1, T2, ...Tn) generating overloading are forwarded to an access network server (RAS1, RAS2, ...RASn) and
that the data transmission of the subscribers (T1, T2, ...Tn) generating overloading is regulated for a determinable time interval (t) by the access network server (RAS1, RAS2, ...RASn).

6. Method according to either of Claims 4 or 5, **characterized in that** a data overloading generated by signalling by the subscribers (T1, T2, ...Tn) can be detected.

## Revendications

1. Dispositif de transmission de données dans un réseau (NZ) avec des usagers (T1, T2, ..., Tn) et au moins une unité de commande (VSE) qui commute des usagers (T1, T2, ..., Tn), au moins un multiplexeur d'usagers (DSLAM1, DSLAM2, ..., DSLAMn) étant prévu dans le réseau (NZ) et chaque usager (T1, T2, ..., Tn) étant relié à l'un des multiplexeurs d'usagers (DSLAM1, DSLAM2, ..., DSLAMn), un premier moyen (M1) étant prévu et réalisé de manière telle, dans l'unité de commande (VSE), que des usagers (T1, T2, ..., Tn) qui génèrent une surcharge de données peuvent être identifiés, un deuxième moyen (M2) étant prévu et réalisé de manière telle, dans le réseau, que, à partir d'une adresse de réseau d'un usager (T1, T2, ..., Tn), le multiplexeur d'usagers (DSLAM1, DSLAM2, ..., DSLAMn) relié à celui-ci peut être déterminé, et la transmission de données des usagers (T1, T2, ..., Tn) entre usagers (T1, T2, ..., Tn) et unité de commande (VSE) pouvant être réglée, **caractérisé en ce que** l'unité de commande (VSE) transmet au deuxième moyen les adresses de réseau des usagers (T1, T2, ..., Tn) qui génèrent une surcharge et **en ce que** le deuxième moyen (M2) donne aux multiplexeurs d'usagers (DSLAM1, DSLAM2, ..., DSLAMn) déterminés l'instruction de régler pour une période de temps déterminable (t) la transmission de données des usagers (T1, T2, ..., Tn) qui génèrent la surcharge.

2. Dispositif selon la revendication 1, **caractérisé en ce qu'**au moins un serveur de réseau de raccordement (RAS1, RAS2, ..., RASn) est prévu dans le réseau (NZ), **en ce que** chaque usager (T1, T2, ..., Tn) est relié à l'unité de commande (VSE) via un serveur de réseau de raccordement (RAS1, RAS2, ..., RASn), **en ce que** l'unité de commande (VSE) retransmet au serveur de réseau de raccordement (RAS1, RAS2, ..., RASn) des adresses de réseau des usagers identifiés (T1, T2, ..., Tn) qui génèrent une surcharge et **en ce que** le serveur de réseau de raccordement (RAS1, RAS2, ..., RASn) règle pour une période de temps déterminable (t) la transmission de données des usagers (T1, T2, ..., Tn) qui génèrent une surcharge.

3. Dispositif selon l'une des revendications précédentes, **caractérisé en ce que** l'unité de commande (VSE) est réalisée de manière telle que peut être identifiée une surcharge de données générée par signalisation par les usagers (T1, T2, ..., Tn).

4. Procédé de transmission de données dans un réseau (NZ) avec des usagers (T1, T2, ..., Tn) et au moins une unité de commande (VSE) qui commute des usagers (T1, T2, ..., Tn), des usagers (T1, T2, ..., Tn) qui génèrent une surcharge de données étant identifiés et la transmission de données de ces usagers (T1, T2, ..., Tn) entre usagers (T1, T2, ..., Tn) et unité de commande (VSE) étant limitée, et, à partir d'une adresse de réseau d'un usager (T1, T2, ..., Tn), un multiplexeur d'usagers (DSLAM1, DSLAM2, ..., DSLAMn) relié à celui-ci étant déterminé, **caractérisé en ce que** les adresses de réseau des usagers (T1, T2, ..., Tn) qui génèrent une surcharge sont transmises à un deuxième moyen (M2) et les multiplexeurs d'usagers (DSLAM1, DSLAM2, ..., DSLAMn) déterminés reçoivent du deuxième moyen (M2) l'instruction de régler pour une période de temps déterminable (t) la transmission de données des usagers (T1, T2, ..., Tn) qui génèrent une surcharge.

5. Procédé selon la revendication 4, **caractérisé en ce que** des adresses de réseau des usagers identifiés (T1, T2, ..., Tn) qui génèrent une surcharge sont retransmises à un serveur de raccordement de réseau (RAS1, RAS2, ..., RASn) et **en ce que** la transmission de données des usagers (T1, T2, ..., Tn) qui génèrent une surcharge est réglée par le serveur de raccordement de réseau (RAS1, RAS2, ..., RASn) pour une période de temps déterminable (t).

6. Procédé selon l'une des revendications 4 ou 5, **caractérisé en ce que** peut être identifiée une surcharge de données générée par signalisation par les usagers (T1, T2, ..., Tn).
